# EUROPEAN PATENT APPLICATION

(11) **EP 4 243 115 A1**
(43) Date of publication of application: **13.09.2023**
(21) Application number: 22864909.1
(22) Date of filing: 12.08.2022
(51) Int. Cl.: H01M 4/131, H01M 4/62, H01M 10/052, H01M 10/0562, H01M 4/02

(54) **ELECTRODE FOR ALL-SOLID-STATE BATTERY**

(30) Priority: 31.08.2021 KR 20210115690
(71) Applicant: LG Energy Solution, Ltd., Seoul 07335 (KR)
(72) Inventor: KWON, Hyejin, Daejeon 34122 (KR); KIM, Sohee, Daejeon 34122 (KR); KIM, Jeonggil, Daejeon 34122 (KR); KIM, Ki Tae, Daejeon 34122 (KR); KIM, Taegon, Daejeon 34122 (KR); KIM, Myeongsoo, Daejeon 34122 (KR)
(74) Representative: Goddar, Heinz J.
(86) International application number: PCT/KR2022/012108
(87) International publication number: WO 2023/033405

(57) **Abstract**

The present invention provides an electrode for an all-solid-state battery comprising granules coated with a sulfide-based solid electrolyte. The granules comprise an active material, an electrically conductive material, and a binder, and the electrically conductive material is carbon nanotubes having a diameter of 1 nm to 10 nm. The carbon nanotubes have a BET specific surface area of 400 m²/g to 1000 m²/g. When the electrode for the all-solid-state battery is applied to the all-solid-state battery, the performance of the battery can be improved.

## Description

### [Technical Field]

The present invention relates to an electrode for an all-solid-state battery. Specifically, the present invention relates to an electrode for an all-solid-state battery comprising granules coated with sulfide-based solid electrolyte.

This application claims the benefit of priority based on Korean Patent Application No. 10-2021-0115690 filed on August 31, 2022, all contents of which are incorporated herein by reference.

### [Background Art]

From the viewpoint of the capacity, safety, output, large size, miniaturization, etc. of the battery, various batteries that can overcome the limitations of lithium secondary batteries are currently being studied.

Typically, a metal-air battery that has a very large theoretical capacity in terms of capacity compared to a lithium secondary battery, an all-solid-state battery that does not have an explosion hazard in terms of safety, a supercapacitor in terms of output, a NaS battery or a redox flow battery (RFB) in terms of large size, a thin film battery in terms of miniaturization and the like are continuously being studied in academia and industry.

Among them, the all-solid-state battery refers to a battery in which the liquid electrolyte used in the existing lithium secondary battery is replaced with a solid, and it does not use a flammable solvent in the battery, so there is no ignition or explosion caused by the decomposition reaction of the conventional electrolyte solution, and thus safety can be greatly improved. In addition, in the case of the all-solid-state battery, since Li metal or Li alloy can be used as a material for the negative electrode, there is an advantage that the energy density for the mass and volume of the battery can be remarkably improved.

In particular, among solid electrolytes for the all-solid-state battery, inorganic solid electrolytes can be divided into sulfide-based and oxide-based. Currently, the most technologically developed solid electrolyte is a sulfide-based solid electrolyte, and as a material for this solid electrolyte, a material with an ion-conductivity close to that of an organic electrolyte solution has been developed.

Among solid electrolytes, sulfide-based solid electrolyte has high ion conductivity (10⁻³ to 10⁻² S/cm) and is ductile, and thus is in good contact with the interface, thereby being advantageous for improving the resistance, However, since the sulfide-based solid electrolyte is sensitive to moisture, and for example, generates H₂S gas upon contact with moisture, and so on, it is necessary to build a very dry environment for manufacturing.

In addition, it is necessary to improve the cohesion of the active material and the solid electrolyte, and it requires a high-density electrode by reducing the porosity.

Accordingly, the inventor of the present invention has completed the present invention by continuously researching an electrode for an all-solid-state battery in order to solve the problems faced in the relevant technical field.

### [Prior Art Document]

### [Patent Document]

(Patent Document 1) Korean Laid-open Patent Publication No. 10-2016-0146737

### [Disclosure]

### [Technical Problem]

The present invention provides an electrode for an all-solid-state battery comprising granules coated with a sulfide-based solid electrolyte, which can improve the performance of the battery when applied as an electrode of an all-solid-state battery.

### [Technical Solution]

According to a first aspect of the present invention,
the present invention provides an electrode for an all-solid-state battery comprising granules coated with a sulfide-based solid electrolyte, wherein the granule comprises an active material, an electrically conductive material, and a binder, and the electrically conductive material is carbon nanotubes having a diameter of 1 nm to 10 nm.

In one embodiment of the present invention, the carbon nanotubes have a BET specific surface area of 400 m²/g to 1000 m²/g.

In one embodiment of the present invention, the carbon nanotubes are single-walled carbon nanotubes.

In one embodiment of the present invention, the granules are spherical particles having a diameter of 30*µ*m to 150*µ*m.

In one embodiment of the present invention, the granules have a porosity of 10% to 40%.

In one embodiment of the present invention, the electrode for the all-solid-state battery is a positive electrode, and the active material is selected from the group consisting of LiCoO₂, LiNiO₂, LiMnO₂, Li₂MnO₃, LiMn₂O₄, Li (NiₐCo_{b}Mn_{c}) O₂ (0<a<1, 0<b<1, 0<c<1, a+b+c=1), LiNi_{1-y}Co_{y}O₂ (O<y<1), LiCo_{1-y}Mn_{y}O₂, LiNi_{1-y}Mn_{y}O₂(O<y<1), Li(NiₐCo_{b}Mn_{c})O₄(0<a<2, 0<b<2, 0<c<2, a+b+c=2), LiMn_{2-z}Ni_{z}O₄ (0<z<2), LiMn_{2-z}Co_{z}O₄(0<z<2) and combinations thereof.

In one embodiment of the present invention, binder is an organic binder, and the organic binder is selected from the group consisting of polyvinylidene fluoride (PVDF), vinylidene fluoride-hexafluoropropylene copolymer (PVDF-co-HFP), polyvinyl alcohol, starch, hydroxypropylcellulose, regenerated cellulose, polyvinylpyrrolidone, polyimide, polyamideimide, polyethylene, polypropylene, ethylene-propylene-diene monomer (EPDM), sulfonated EPDM, styrene butadiene rubber and fluorine rubber.

In one embodiment of the present invention, the granule contains 85 % by weight to 99.8 % by weight of an active material, 0.1 % by weight to 10 % by weight of a binder and 0.1 % by weight to 10 % by weight of an electrically conductive material.

In one embodiment of the present invention, when the inner diameter of the granule is divided by equal intervals to divide a first region, a second region and a third region in the order from the center of the granule to the outside of the granule, the content of the electrically conductive material in the granule is increased in the order of the first region, the second region, and the third region.

In one embodiment of the present invention, the third region of the granule contains 40% by weight or more of the electrically conductive material based on the total content of the electrically conductive material in the granule.

In one embodiment of the present invention, the electrode active material layer comprising granules coated with the sulfide-based solid electrolyte in the electrode for the all-solid-state battery has a thickness of 100*µ*m to 300pm.

In one embodiment of the present invention, the electrode active material layer comprising granules coated with the sulfide-based solid electrolyte in the electrode for the all-solid-state battery contains 20 % by weight to 40 % by weight of sulfide-based solid electrolyte based on the content of granules.

According to a second aspect of the present invention, the present invention provides an all-solid-state battery comprising the electrode for the above-described all-solid-state battery as a positive electrode or a negative electrode.

### [Advantageous Effects]

In the electrode for the all-solid-state battery with granules coated with the sulfide-based solid electrolyte, the granules comprise an active material, an electrically conductive material, and a binder, and the electrically conductive material comprised in the granule is selected as carbon nanotubes having a diameter of 1 nm to 10 nm, and therefore, when applied to an all-solid-state battery as an electrode for an all-solid-state battery, the performance of the battery can be improved by improving the interaction between the active material contained in the granule and the sulfide-based solid electrolyte coated on the granule.

### [Description of Drawings]

FIG. 1 is a view showing the shape of the granule according to an embodiment of the present invention.
FIG. 2 is a view showing a scanning electron microscope (SEM) image of the granules prepared according to Example 1 of the present invention. The magnification of the image is ×1,000.

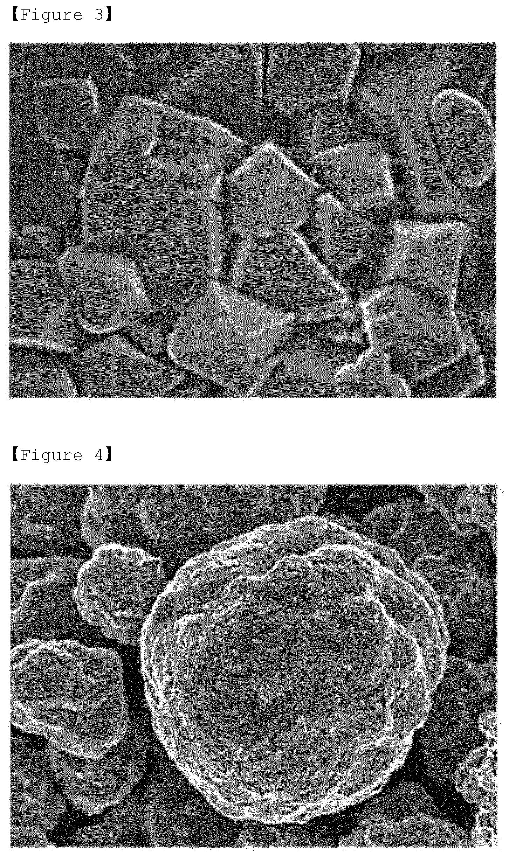

FIG. 3 is a view showing a scanning electron microscope (SEM) image of the granules prepared according to Example 1 of the present invention. The magnification of the image is ×10,000.
FIG. 4 is a view showing a scanning electron microscope (SEM) image of the granules prepared according to Comparative Example 1 of the present invention. The magnification of the image is ×2,000.

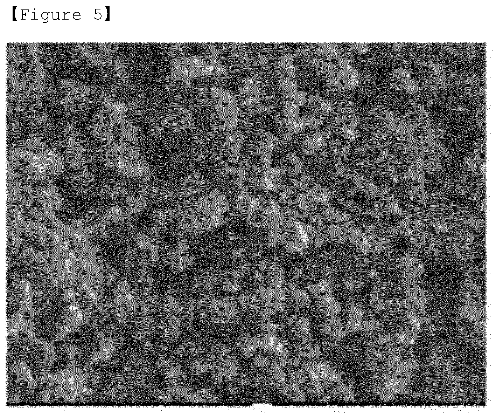

FIG. 5 is a view showing a scanning electron microscope (SEM) image of the granules prepared according to Comparative Example 1 of the present invention. The magnification of the image is ×500.

### [Best Mode]

The embodiments provided according to the present invention can all be achieved by the following description. It is to be understood that the following description describes preferred embodiments of the present invention and it should be understood that the present invention is not necessarily limited thereto.

With respect to the physical properties described herein, if measurement conditions and methods are not specifically described, the physical properties are measured according to measurement conditions and methods generally used by those skilled in the art.

In one aspect of the present invention, the present invention provides an electrode for an all-solid-state battery comprising granules coated with a sulfide-based solid electrolyte. The granule is a spherical particle containing an active material, an electrically conductive material, and a binder. Here, the term "spherical" does not mean a perfect spherical shape in a strict sense, and is generally used as a comprehensive concept comprising particles having a round shape. The particulate active material in a powder state is combined with an electrically conductive material by a binder solution to grow into particles having a specific range of specifications.

According to one embodiment of the present invention, the granules are spherical particles having a diameter of 30 gm to 150 gm. Here, since the spherical particle does not mean a perfectly spherical particle, the diameter means the largest value among the distances from an arbitrary point on the particle surface to a point on the other surface. Specifically, the diameter of the granules may be 30*µ*m or more, 35*µ*m or more, 40*µ*m or more, 45*µ*m or more, 50*µ*m or more, and 150*µ*m or less, 145*µ*m or less, 140*µ*m or less, 135*µ*m or less, 130*µ*m or less, 125*µ*m or less, 120*µ*m or less. If the diameter of the granules is less than the above range, since there are few pores in the granule layer, the amount of the sulfide-based solid electrolyte penetrating and coating between the granule and the granule is reduced and thus the improvement in the performance of the battery may not appear clearly. If the diameter of the granule exceeds the above range, the distance between the surface in contact with the sulfide-based solid electrolyte and the center of the granule increases, and thus the improvement in the performance of the battery may not appear clearly.

The electrode for the all-solid-state battery according to an embodiment of the present invention may be any one of a negative electrode and a positive electrode, and more specifically, the electrode for the all-solid-state battery may be a positive electrode.

If the electrode is a negative electrode, the electrode active material contained in the granules is not particularly limited as long as it can be used as a negative electrode active material for a lithium-ion secondary battery. For example, the negative electrode active material may be one or more species selected from carbon such as non-graphitizable carbon and graphite-based carbon; metal composite oxides such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, elements of groups 1, 2, and 3 of the periodic table, halogen; 0<x≤1; 1≤y≤3; 1≤z≤8); lithium metal; lithium alloy; silicon-based alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; an electrical conductivity polymer such as polyacetylene; Li-Co-Ni based material; titanium oxide; lithium titanium oxide. According to one embodiment of the present invention, the negative electrode active material may comprise a carbonaceous material and/or Si.

If the electrode is a positive electrode, the electrode active material contained in the granule is not particularly limited as long as it can be used as a positive electrode active material for a lithium-ion secondary battery. For example, the positive electrode active material may be a lithium transition metal oxide containing one or more transition metals. In one embodiment of the present invention, the positive electrode active material is selected from the group consisting of LiCoO₂, LiNiO₂, LiMnO₂, Li₂MnO₃, LiMn₂O₄, Li (NiₐCo_{b}Mn_{c})O₂(0<a<1, 0<b<1, 0<c<1, a+b+c=1), LiNi_{1-y}Co_{y}O₂(O<y<1), LiCo_{1-y}Mn_{y}O₂, LiNi_{1-y}Mn_{y}O₂(O<y<1), Li (NiₐCo_{b}Mn_{c}) O₄(0<a<2, 0<b<2, 0<c<2, a+b+c=2), LiMn_{2-z}Ni_{z}O₄(0<z<2), LiMn_{2-z}Co_{z}O₄ (0<z<2) and a combination thereof.

The electrically conductive material included in the granule according to an embodiment of the present invention is carbon nanotubes having a diameter of 1 nm to 10 nm. Here, the diameter means the largest value among the distances from the outermost arbitrary point to the other point based on the circular cross section of the carbon nanotube. Specifically, the diameter of the carbon nanotube may be 1 nm or more, 2 nm or more, 3 nm or more, and 10 nm or less, 9 nm or less, 8 nm or less. If the diameter of the carbon nanotubes is less than the above range, since the external area of the carbon nanotube is small, it is difficult to form an effective structure between the active materials, for example, the area in contact with the active material is reduced and so on, and thus the improvement in the performance of the battery may not appear clearly. If the diameter of carbon nanotubes exceeds the above range, since it is difficult to tightly connect the active materials, a large amount of active materials cannot be covered systematically, as compared to the input weight of carbon nanotubes, and thus the improvement in the performance of the battery may not appear clearly.

According to one embodiment of the present invention, the carbon nanotubes have a BET specific surface area of 400 m²/g to 1000 m²/g. The BET specific surface area is a specific surface area measured by the BET method, and specifically, it is preferable to calculate the nitrogen gas adsorption amount under liquid nitrogen temperature (77 K) using BELSORP-mini II manufactured by BEL Japan company. Specifically, the BET specific surface area of the carbon nanotubes may be 400 m²/g or more, 450 m²/g or more, 500 m²/g or more, and 1000 m²/g or less, and 950 m²/g or less, 900 m²/g or less, 850 m²/g or less, 800 m²/g or less, 750 m²/g or less, 700 m²/g or less. If the BET specific surface area of the carbon nanotubes is less than the above range, since the area in contact with the active material is reduced as compared to the weight of carbon nanotubes, the improvement in the performance of the battery may not appear clearly. If the BET specific surface area of the carbon nanotubes exceeds the above range, since it is not possible to more easily contact with the active materials, the solid electrolytes or the like as much as the specific surface area being exceeded, the improvement in the performance of the battery may not appear clearly.

According to one embodiment of the present invention, the carbon nanotubes are single-walled carbon nanotubes. In the case of single-walled carbon nanotubes, since it has a structure favorable to contact with the active material even at low weight compared to multi-walled carbon nanotubes, it is advantageous in improving the performance of the battery. The carbon nanotubes may have a monomolecular fiber structure.

The binder contained in the granule according to an embodiment of the present invention is mixed with the active material and the electrically conductive material, which are particulates in a powder state, to combine each component to help the growth of the particles. The sulfide-based solid electrolyte is sensitive to moisture, for example, it generates H₂S gas, when it comes into contact with moisture, and thus it is preferable to exclude moisture as much as possible from the time of forming the granules. According to one embodiment of the present invention, the binder is an organic binder. The organic binder means a binder that is dissolved or dispersed in an organic solvent, particularly N-methylpyrrolidone (NMP), and is distinguished from an aqueous binder using water as a solvent or dispersion medium. Specifically, the organic binder may be selected from the group consisting of polyvinylidene fluoride (PVDF), vinylidene fluoride-hexafluoropropylene copolymer (PVDF-co-HFP), polyvinyl alcohol, starch, hydroxypropylcellulose, regenerated cellulose, polyvinylpyrrolidone, polyimide, polyamideimide, polyethylene, polypropylene, ethylene-propylene-diene monomer (EPDM), sulfonated EPDM, styrene butadiene rubber and fluorine rubber, but is not limited thereto.

According to one embodiment of the present invention, the content of the active material in the granules is 85 % by weight to 99.8 % by weight, specifically 88 % by weight to 99.5 % by weight, more specifically 90 % by weight to 99.3 % by weight, and the content of the binder is 0.1 % by weight to 10 % by weight, specifically 0.2 % by weight to 8 % by weight, more specifically 0.3 % by weight to 7 % by weight, and the content of the electrically conductive material is 0.1 % by weight to 10 % by weight, specifically 0.2 % by weight to 8 % by weight, more specifically 0.3 % by weight to 7 % by weight. When the contents of the active material, the binder and the electrically conductive material are adjusted within the above-mentioned ranges, it may be advantageous to improve the performance of the battery.

According to one embodiment of the present invention, the granules have a porosity of 10% to 40%. The porosity of the granules means a volume ratio of pores in the granules, and the porosity may be measured, for example, by a BET (Brunauer-Emmett-Teller) measurement method or a mercury penetration method (Hg porosimeter), but is not limited thereto. Specifically, the porosity of the granules may be 10% or more, 15% or more, 20% or more, 25% or more, and 40% or less, 35% or less, 30% or less. If the porosity of the granules is less than the above range, since the sulfide-based solid electrolyte is difficult to come into close contact with the granules, the performance improvement of the battery may not appear clearly. If the porosity of the granules exceeds the above range, since the amount of the active material is reduced compared to the volume of the granules, the performance improvement of the battery may not appear clearly, in that it is difficult to provide the electrode highly loaded with the active material.

When manufacturing granules, a binder solution is added together with the active material and electrically conductive material of particulates in a powder state to grow the particle size of the granules to a specific level, and at this time, the inside of the device can be rotated to spheroidize the granules and separate each granule. By this rotation, centrifugal force can act on the granule, and the components of the granule can exist more densely outside the granule than at the center of the granule. In particular, the above-described carbon nanotubes, which are electrically conductive materials, are more greatly affected by centrifugal force due to characteristics such as structure.

When manufacturing granules, a binder solution is added together with the active material and electrically conductive material of particulates in a powder state to grow the particle size of the granules to a specific level. As the solvent is dried in the formed granule, the binder and the electrically conductive material, which are relatively light in weight, are positioned outside the granule, so that the density of the outside of the granule can be increased. In particular, the above-mentioned carbon nanotubes, which are electrically conductive materials, are also small in size and light, and thus can be located more densely outside in the granule after drying.

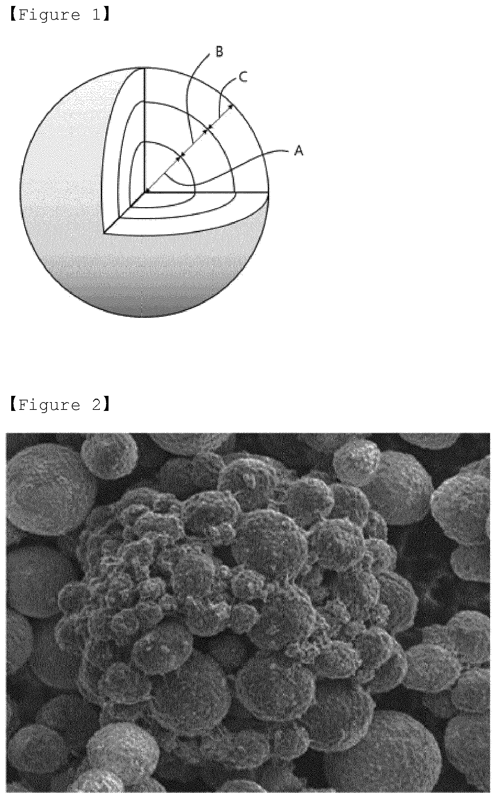

FIG. 1 is a view showing the shape of the granule according to an embodiment of the present invention, and as shown in FIG. 1, the inside of the granule may be divided into the first region (region A), the second region (region B), and the third region (region C). The first region, the second region and the third region are divided by dividing the inner diameter of the granule at equal intervals, and the first region is located at the center of the granule, the third region is located at the outermost part of the granule, and the second region is located between the first region and the third region. According to one embodiment of the present invention, the content of the electrically conductive material in the granule increases in the order of the first region, the second region, and the third region. According to one embodiment of the present invention, the third region of the granule contains 40% by weight or more, specifically 50% by weight or more, and more specifically 60% by weight or more of the electrically conductive material based on the total content of electrically conductive material in the granule. Although the electrically conductive material has a higher content distribution of the electrically conductive material on the outside than at the center of the granule due to the structural characteristics of the carbon nanotubes described above, it can perform sufficiently as an electron transfer path between the sulfide-based solid electrolyte and the active material

In the electrode for the all-solid-state battery described above, the solid electrolyte may be coated on at least a part or all of the surface of the granules. The polymer-based solid electrolyte may be a polymer solid electrolyte formed by adding a polymer resin to a solvated lithium salt, or a polymer gel electrolyte obtained by incorporating an organic solvent and an organic electrolyte containing a lithium salt, an ionic liquid, a monomer or an oligomer, etc. to a polymer resin. The solid electrolyte may be at least one selected from a polymer-based solid electrolyte, a sulfide-based solid electrolyte, and an oxide-based solid electrolyte, and according to one embodiment of the present invention, the solid electrolyte is a sulfide-based solid electrolyte. In the electrode for the all-solid-state, the sulfide-based solid electrolyte is applied by impregnating the sulfide-based electrolyte with the granular layer composed of the above-mentioned granules and then drying it.

According to one embodiment of the present invention, the lithium salt is an ionizable lithium salt, which may be expressed as Li⁺X⁻. The anion of the lithium salt is not particularly limited, but F-, Cl⁻, Br⁻, I⁻, NO₃⁻, N(CN)₂⁻, BF₄⁻, ClO₄⁻, PF₆⁻, (CF₃) ₂PF₄⁻, (CF₃) ₃PF₃⁻, (CF₃) ₄PF₂⁻, (CF₃) ₅PF⁻, (CF₃) ₆P⁻, CF₃SO₃⁻, CF₃CF₂SO₃⁻, (CF₃SO₂) ₂N⁻, (FSO₂) ₂N⁻, CF₃CF₂ (CF₃) ₂CO⁻, (CF₃SO₂) ₂CH⁻, (SF₅) ₃C⁻, (CF₃SO₂) ₃C⁻, CF₃ (CF₂) ₇SO₃⁻, CF₃CO₂⁻, CH₃CO₂⁻, SCN-, (CF₃CF₂SO₂) ₂N⁻ and the like can be exemplified. In one embodiment of the present invention, the sulfide-based solid electrolyte contains sulfur (S) and has ionic conductivity of a metal belonging to Group 1 or Group 2 of the periodic table, which may comprise Li-P-S-based glass or Li-P-S-based glass ceramics. Non-limiting examples of such a sulfide-based solid electrolyte may be Li₂S-P₂S₅, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS and the like, and may comprise one or more of them.

The electrode for the all-solid-state battery according to an embodiment of the present invention may be manufactured by loading the granules on the current collector to prepare a granule layer in the form of a sheet, and then impregnating the granule layer with a sulfide-based electrolyte and drying it. In this case, the current collector is one that exhibits electrical conductivity such as a metal plate, and an electrode known in the art may be appropriately used depending on the polarity of the battery.

According to one embodiment of the present invention, in the electrode for the all-solid-state battery, the electrode active material layer comprising the granules coated with the sulfide-based solid electrolyte has a thickness of 100 *µ*m to 300 *µ*m. Here, the electrode active material layer, when a current collector is used in manufacturing the electrode, means a sheet-like layer applied on the current collector except for the current collector. Specifically, the thickness of the electrode active material layer may be 100*µ*m or more, 110*µ*m or more, 120*µ*m or more, 130*µ*m or more, 140*µ*m or more, 150*µ*m or more and, 300*µ*m or less, 290*µ*m or less, 280*µ*m or less, 270*µ*m or less, 260*µ*m or less, 250*µ*m or less. If the thickness of the electrode active material layer is less than the above range, as the loading amount of the active material is reduced, the performance improvement of the battery may not appear clearly. If the thickness of the electrode active material layer exceeds the above range, as the durability of the electrode is poor, the performance improvement of the battery may not appear clearly.

According to one embodiment of the present invention, in the electrode for the all-solid-state battery, the electrode active material layer containing the granules coated with the sulfide-based solid electrolyte contains the sulfide-based solid electrolyte of 20 % by weight to 40 % by weight based on the content of the granules. Specifically, the content of sulfide-based solid electrolyte may be 20 % by weight or more, 21 % by weight or more, 22 % by weight or more, 23 % by weight or more, 24 % by weight or more, 25 % by weight or more, and 40 % by weight or less, 39 % by weight or less, 38 % by weight or less, 37 % by weight or less, 36 % by weight or less, 35 % by weight or less. If the content of the sulfide-based solid electrolyte is less than the above range, as an all-solid-state battery, electron movement between the electrolyte and the active material is not easy, so the performance improvement of the battery may not appear clearly. If the content of the sulfide-based solid electrolyte exceeds the above range, the loading amount of the active material is relatively reduced, so the performance improvement of the battery may not appear clearly.

In one aspect of the present invention, the present invention provides an all-solid-state battery comprising an electrode for the above-described all-solid-state battery as a positive electrode and/or a negative electrode. In configuring the all-solid-state battery, a separate solid electrolyte layer may be introduced between the positive electrode and the negative electrode in addition to the solid electrolyte comprised in the electrode, and this solid electrolyte layer can play the same role as a separator in a general lithium secondary battery at the same time. In some cases, the above-described electrode can be used as a semi-solid battery by using a liquid electrolyte together, and in this case, a separate polymer separator may be further required.

The polymer separator is interposed between the negative electrode and the positive electrode, which serves to electrically insulate the negative electrode and the positive electrode while allowing lithium ions to pass therethrough. The polymer separator may be any one used as a polymer separator membrane used in the field of general all-solid-state batteries and is not particularly limited.

In one aspect of the present invention, the present invention provides a battery module comprising the all-solid-state battery as a unit battery, a battery pack comprising the battery module, and a device comprising the battery pack as a power source.

Specific examples of the device may comprise, but are not limited to, a power tool powered by an electric motor; electric cars comprising an electric vehicle (EV), a hybrid electric vehicle (HEV), a plug-in hybrid electric vehicle (PHEV), and the like; an electric motorcycle comprising an electric bike (E-bike) and an electric scooter (E-scooter); an electric golf cart; and a power storage system.

Hereinafter, preferred Examples are presented to help the understanding of the present invention, but the following Examples are provided for easier understanding of the present invention, and the present invention is not limited thereto.

### Preparation Example: Preparation of granule containing active material

### Preparation Example 1

LiNi_{0.6}Co_{0.2}Mn_{0.2}O₂ (NCM 622) as an active material, linear single-walled carbon nanotubes (diameter: about 5 nm, BET specific surface area: about 600 m²/g) as an electrically conductive material and polyvinylidene fluoride (PVDF) as a binder were mixed in an N-methylpyrrolidone solvent in a weight ratio of 94:3:3 (active material: electrically conductive material: binder) to prepare a slurry, and then from such a slurry, granules (porosity: 30%) with a diameter of about 60 *µ*m were prepared by a spray drying method.

### Comparative Preparation Example 1

LiNi_{0.6}Co_{0.2}Mn_{0.2}O₂ (NCM 622) as an active material, spherical carbon black (diameter: about 20 nm, BET specific surface area: about 200 m²/g) as an electrically conductive material and polyacrylic acid as a binder were mixed in water (H₂O) in a weight ratio of 94:3:3 (active material: electrically conductive material: binder) to prepare a slurry, and then from such a slurry, granules (porosity: 20%) with a diameter of about 60 *µ*m were prepared by a spray drying method.

### Comparative Preparation Example 2

LiNi_{0.6}Co_{0.2}Mn_{0.2}O₂ (NCM 622) as an active material, linear multi-walled carbon nanotubes (diameter: about 13 nm, BET specific surface area: about 200 m²/g) as an electrically conductive material and polyvinylidene fluoride (PVDF) as a binder were mixed in N-methylpyrrolidone solvent in a weight ratio of 94:3:3 (active material: electrically conductive material: binder) to prepare a slurry, and then from such a slurry, granules (porosity: 23%) with a diameter of about 60 *µ*m were prepared by a spray drying method.

### Example: Preparation of battery comprising prepared granule

### Example 1

The granules prepared in Preparation Example 1 were coated on one side of an aluminum current collector, rolled, impregnated with a sulfide-based electrolyte of Li₂S-P₂S₅, dried and rolled to prepare a positive electrode with a thickness of about 200 *µ*m (the sulfide-based electrolyte is contained in an amount of about 30% by weight compared to the granule) . Li₂S-LiCl-P₂S₅ was mixed with a polyvinylidene fluoride (PVDF) solution (a solution in which PVDF and toluene were mixed in a weight ratio of 8:92) to prepare a slurry, and then the slurry was applied to a thickness of about 50 *µ*m on a lithium foil (Li foil) with a thickness of about 150 *µ*m to obtain a solid electrolyte and a negative electrode containing it. The positive electrode and the negative electrode were laminated and pressed to prepare an electrode assembly, and then, the electrode assembly was placed inside the battery case to prepare an all-solid-state battery.

### Comparative Example 1

An all-solid-state battery was manufactured in the same way as in Example 1, except that when manufacturing the positive electrode, the granules prepared in Comparative Preparation Example 1 instead of Preparation Example 1 were used.

### Comparative Example 2

An all-solid-state battery was manufactured in the same way as in Example 1, except that when manufacturing the positive electrode, the granules prepared in Comparative Preparation Example 2 instead of Preparation Example 1 were used.

### Comparative Example 3

The granule prepared in Preparation Example 1 was applied to one side of an aluminum current collector and rolled to prepare a positive electrode with a thickness of about 200*µ*m. An electrode assembly was prepared by preparing a lithium foil with a thickness of about 150 *µ*m as a negative electrode and porous polyethylene as a separator, and interposing a separator of porous polyethylene between the positive electrode and the negative electrode. The electrode assembly was placed inside the battery case, and then, an electrolyte was injected into the case to prepare a lithium secondary battery. At this time, an electrolyte solution was prepared by dissolving lithium hexafluorophosphate (LiPF₆) at a concentration of 1.0M in an organic solvent consisting of ethylene carbonate / dimethyl carbonate / ethylmethyl carbonate (mixed volume ratio of EC / DMC / EMC = 3 / 4 / 3).

### Comparative Example 4

A lithium secondary battery was manufactured in the same way as Comparative Example 3, except that when manufacturing the positive electrode, the granules prepared in Comparative Preparation Example 1 instead of Preparation Example 1 were used.

### Comparative Example 5

A lithium secondary battery was manufactured in the same way as Comparative Example 3, except that when manufacturing the positive electrode, the granules prepared in Comparative Preparation Example 2 instead of Preparation Example 1 were used.

### Experimental Example: Evaluation of performance of manufactured battery

The batteries prepared in Example 1 and Comparative Examples 1 to 5 were charged/discharged, and the discharge capacity (mAh/g) and coulombic efficiency (%) after 10 cycles were measured, and the results are shown in Table 1. Meanwhile, when evaluating the performance of the battery, the batteries were charged/discharged at 0.05C at a temperature of 60°C, and 10 cycles were terminated in the discharging (lithium not in the negative electrode) state, and the discharging capacity (mAh/g) and coulombic efficiency (%) were measured.
Charging condition: 0.05C, 4.25V CC/CV, 0.01C cut-off
Discharging condition: 0.05C, 3V

The results are shown in Table 1 below.

**Table 1:**

| | Coulombic efficiency (%) | Discharging capacity (mAh/g) |
|---|---|---|
| Example 1 | 97.3 | 115 |
| Comparative Example 1 | 89.3 | 105 |
| Comparative Example 2 | 90.2 | 106 |
| Comparative Example 3 | 86.4 | 99 |
| Comparative Example 4 | 88.5 | 101 |
| Comparative Example 5 | 88.6 | 101 |

According to Table 1, in the case of the al-solid-state batteries, the all-solid-state battery of Example 1 showed excellent effects in coulombic efficiency and discharging capacity even after 10 cycles as compared with the all-solid-state battery of Comparative Examples 1 and 2. However, when the same active material granule is evaluated in a lithium secondary battery using a liquid electrolyte, the lithium secondary battery of Comparative Example 3 corresponding to Example 1 did not show an excellent effect on the coulombic efficiency and discharge capacity after 10 cycles, and rather showed lower coulombic efficiency and lower discharging capacity, as compared to the lithium secondary batteries of Comparative Examples 4 and 5 corresponding to Comparative Examples 1 and 2, respectively.

The all-solid-state battery is impregnated with a ductile sulfide-based electrolyte, dried and rolled, and is operated in a state that the porosity of the electrode is significantly lower than that of a lithium secondary battery using a liquid electrolyte. The functionality of the granules of the active material may vary depending on the environment inside the battery, and the electrode according to the present invention, such as Example 1, has improved functionality and can be suitably applied to an all-solid-state battery.

All simple modifications and variations of the present invention fall within the scope of the present invention, and the specific protection scope of the present invention will become clear from the appended claims.

## Claims

1. An electrode for an all-solid-state battery comprising granules coated with a sulfide-based solid electrolyte,
wherein the granules comprise an active material, an electrically conductive material and a binder, and
wherein the electrically conductive material is carbon nanotubes having a diameter of 1 nm to 10 nm.

2. The electrode for the all-solid-state battery according to claim 1, wherein the carbon nanotubes have a BET specific surface area of 400 m²/g to 1000 m²/g.

3. The electrode for the all-solid-state battery according to claim 1, wherein the carbon nanotubes are single-walled carbon nanotubes.

4. The electrode for the all-solid-state battery according to claim 1, wherein the granules are spherical particles having a diameter of 30 *µ*m to 150 *µ*m.

5. The electrode for the all-solid-state battery according to claim 1, wherein the granules have a porosity of 10% to 40%.

6. The electrode for the all-solid-state battery according to claim 1, wherein the electrode for the all-solid-state battery is a positive electrode, and the active material is selected from the group consisting of LiCoO₂, LiNiO₂, LiMnO₂, Li₂MnO₃, LiMn₂O₄, Li (NiₐCo_{b}Mn_{c}) O₂ (0<a<1, 0<b<1, 0<c<1, a+b+c=1), LiNi_{1-y}Co_{y}O₂ (O<y<1), LiCo_{1-y}Mn_{y}O₂, LiNi_{1-y}Mn_{y}O₂ (O<y<1), Li (NiₐCo_{b}Mn_{c}) O₄ (0<a<2, 0<b<2, 0<c<2, a+b+c=2), LiMn_{2- z}Ni_{z}O₄ (0<z<2), LiMn_{2-z}Co_{z}O₄ (0<z<2) and a combination thereof.

7. The electrode for the all-solid-state battery according to claim 1, wherein the binder is an organic binder, and the organic binder is selected from the group consisting of polyvinylidene fluoride (PVDF), vinylidene fluoride-hexafluoropropylene copolymer(PVDF-co-HFP), polyvinyl alcohol, starch, hydroxypropylcellulose, regenerated cellulose, polyvinylpyrrolidone, polyimide, polyamideimide, polyethylene, polypropylene, ethylene-propylene-diene monomer (EPDM), sulfonated EPDM, styrene butadiene rubber and fluorine rubber.

8. The electrode for the all-solid-state battery according to claim 1, wherein the granule contains 85 % by weight to 99.8 % by weight of the active material, 0.1 % by weight to 10 % by weight of the binder and 0.1 % by weight to 10 % by weight of the electrically conductive material.

9. The electrode for the all-solid-state battery according to claim 1, wherein when the inner diameter of the granule is divided by equal intervals to divide a first region, a second region and a third region in the order from the center of the granule to the outside of the granule, the content of the electrically conductive material in the granule is increased in the order of the first region, the second region, and the third region.

10. The electrode for the all-solid-state battery according to claim 9, wherein the third region of the granule contains 40% by weight or more of the electrically conductive material based on the total content of the electrically conductive material in the granule.

11. The electrode for the all-solid-state battery according to claim 1, wherein in the electrode for the all-solid-state battery, the electrode active material layer containing the granules coated with the sulfide-based solid electrolyte has a thickness of 100 *µ*m to 300 *µ*m.

12. The electrode for the all-solid-state battery according to claim 1, wherein in the electrode for the all-solid-state battery, the electrode active material layer containing the granules coated with the sulfide-based solid electrolyte contains 20 % by weight to 40 % by weight of the sulfide-based solid electrolyte based on the content of the granules.

13. An all-solid-state battery comprising the electrode for the all-solid-state battery according to claim 1 as a positive electrode or a negative electrode.
